# EUROPEAN PATENT SPECIFICATION

(11) **EP 2 001 236 B1**
(45) Date of publication and mention of the grant of the patent: **11.09.2013**
(21) Application number: 06828297.9
(22) Date of filing: 12.12.2006
(51) Int. Cl.: H04N 7/26

(54) **A VIDEO LAYERED CODING AND DECODING METHOD AND A CODING AND DECODING DEVICE IN INTERLACED MODE**
VIDEOGESCHICHTETES CODIERUNGS- UND DECODIERUNGSVERFAHREN UND CODIERUNGS- UND DECODIERUNGSEINRICHTUNG IM VERSCHACHTELTEN MODUS
PROCEDE DE CODAGE-DECODAGE VIDEO PAR COUCHES ET DISPOSITIF DE CODAGE-DECODAGE EN MODE ENTRELACE

(30) Priority: 27.03.2006 CN 200610073446
(43) Date of publication of application: 10.12.2008
(73) Proprietor: Huawei Technologies Co., Ltd., Longgang District, Shenzhen Guangdong 518129 (CN)
(72) Inventor: XIE, Qingpeng, 518129 Shenzhen, Guangdong Province (CN); XIONG, Lianhuan, 518129 Shenzhen, Guangdong Province (CN); LIN, Sixin, 518129 Shenzhen, Guangdong Province (CN); ZENG, Pengxin, 518129 Shenzhen, Guangdong Province (CN); ZHOU, Jiantong, 518129 Shenzhen, Guangdong Province (CN)
(74) Representative: Kreuz, Georg Maria
(86) International application number: PCT/CN2006/003374
(87) International publication number: WO 2007/109938

(56) References cited:
- EP-A1- 1 455 534
- EP-A1- 1 848 218
- WO-A1-99/33274
- WO-A1-2007/077116
- CN-A- 1 321 398
- BOTTREAU V: "Prop. for SVC interlaced inter-layer pred" 20060114, 14 January 2006 (2006-01-14), XP030006282
- S-W PARK ET AL: "Inter-layer prediction for interlaced SVC" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-R030, 11 January 2006 (2006-01-11), XP030006298
- "Description of Core Experiments for Scalable Video Coding (SVC)" JOINT VIDEO TEAM (JVT) OF ISO/IEC MPEG & ITU-T VCEG(ISO/IEC JTC1/SC29/WG11 AND ITU-T SG16 Q6), XX, XX, no. N6898, 21 January 2005 (2005-01-21), XP030013618
- JVT: "Draft of Joint Scalable Video Model JSVM-4 Annex G" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-Q202, 18 November 2005 (2005-11-18), XP030006255
- XIE Q ET AL: "A layer prediction for interlace" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-S023, 1 April 2006 (2006-04-01), XP030006402
- XIE Q ET AL: "Inter-layer MV prediction for interlace" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-T035, 20 July 2006 (2006-07-20), XP030006522
- VIERON J ET AL: "CE4: Inter-layer prediction for interlace/progressive SVC" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-S018, 1 April 2006 (2006-04-01), pages 1-16, XP002410346
- JVT: "Joint Scalable Video Model (JSVM) 6" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-S202, 8 June 2006 (2006-06-08), XP030006480
- FRANCOIS E ET AL: "Interlaced coding in SVC" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-U146, 20 October 2006 (2006-10-20), XP030006792

## Description

### BACKGROUND OF THE INVENTION

### Field of the Invention

The present invention relates to a video layered coding technology, and more particularly to a video layered coding method, a coding and decoding device in an interlaced mode.

### Background of the Related Art

Scalable video coding (SVC) is an attractive video coding technology, which realizes a random clipping of video code streams through relevant processing performed after the coding motion. A code stream of video layered coding includes a base layer (BL) and more than one enhanced layer (EL).

The SVC introduces videos in an interlaced mode. In the interlaced mode, as two successive frames are quite similar originally, the two successive frames are combined into one frame for coding, so as to improve the coding efficiency. Such the interlaced mode has achieved desirable effects in static or slowly-moving video streams. For example, two successive images of a video stream on the time axis are sampled to obtain two half images, in which a vertical resolution thereof is reduced to half of the original value, and then, the two half images are alternately interlaced to obtain an interlaced image. The above process is referred to as interlacing, in which the interlaced image is referred to as a frame, and the half image before the interlacing is referred to as field.

Two coding modes are adopted in the interlaced mode, one is a macroblock adaptive frame/field (MBAFF) mode, and the other is a picture adaptive frame/field (PAFF) mode. It should be noted that, two concepts are introduced herein, namely, a frame coding mode and a field coding mode, which respectively denote a unified coding manner and an independent coding manner. In the frame coding (unified coding) mode, corresponding contents of two fields are coded together, so this mode is applicable to the coding of static image streams or slow motion images; in the field coding (independent coding) mode, the corresponding contents of the two fields are coded independently, so this mode is applicable to the coding of fast motion images. Here, the frame coding mode and the field coding mode use the concepts of frame and field.

The interlaced mode can be implemented in both the BL and the EL. Different from the interlaced mode (i mode), another common mode in the SVC without using the interlacing technology is referred to as a progressive mode (p mode). Though the i mode effectively improves the coding efficiency and compression ratio of media streams, a content structure in one layer (the BL or EL) is changed in i mode, and as a result, the corresponding content or rate of this layer may be different from that of the other layers, so that texture information or motion information prediction in the original inter-layer prediction of the SVC is not applicable to the i mode. Therefore, a method and device for inter-layer motion prediction and texture prediction in i mode thereof needs to be developed to improve the efficiency of the inter-layer prediction in i mode, so as to guarantee or even enhance the compression efficiency of the SVC.

Currently, an overall solution for the inter-layer prediction in i mode is described as follows. A virtual base layer (VBL) is constructed to realize conversion and mapping of different modes between layers. The VBL keeps the texture and motion information of the BL, and adopts a frame/field coding structure mode the same as that of the EL. Thus, the VBL can realize the inter-layer prediction in i mode without changing the original system architecture.

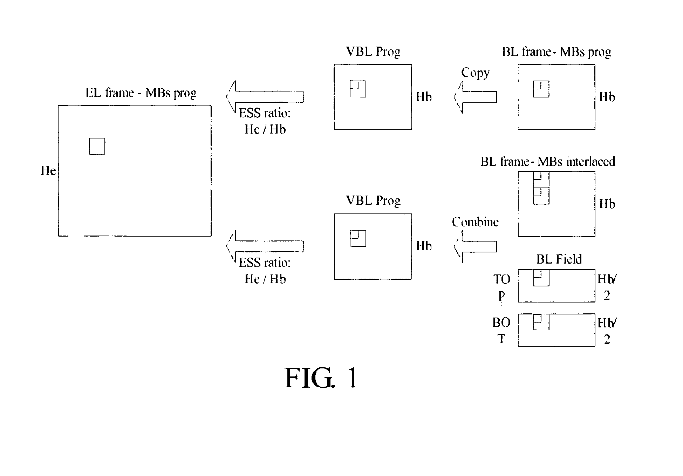

When a combination of the BL and the EL is i->p, that is, the BL is coded in i mode (including the PAFF mode and the MBAFF mode), and an input sequence of the EL is progressive scanning (that is, coded in p mode), and thus, the combination in which the EL is predicted from the BL is referred to as i->p. FIG. 1 shows a process for forming the VBL.

As shown in FIG. 1, paths in an upper part indicate common inter-layer prediction in the non-interlaced mode, and paths in a lower part indicate the process for forming the VBL in i->p mode. It should be noted that, a merging process exists in the above forming process. The leftmost part of FIG. 1 schematically shows positions of macroblocks corresponding to the fields or frames in the BLs of two levels (the upper level is the MBAFF, and the lower level is the PAFF) in i mode. It is assumed that the fields in FIG. 1 include a TOP field and a Bottom (BOT) field. Then, after the merging process, a VBL with the same structure as the EL on the right part is obtained. The difference between the VBL and the EL merely lies in the definition. Therefore, once the merging process is completed, an original inter-layer prediction in p mode can be used to achieve the prediction of the EL from the VBL, without changing existing devices and algorithms.

Therefore, a key point of the inter-layer prediction method in i mode lies in how to realize the merging process and to map the BL in i mode to the VBL. A current solution is to select a macroblock according to a coding manner (intra or inter) by taking a macroblock as a unit, that is, select one macroblock from macroblocks corresponding to different fields according to the coding manners thereof, magnify the selected macroblock to serve as the macroblock corresponding to the VBL. Thus, a complete VBL can be obtained by selecting one macroblock from all the macroblocks and vertically magnifying the selected macroblock.

In actual applications, the above solution has a following problem: in an actual application of video stream compression, the field corresponding to each frame in i mode is generally corresponding to a different time point in the actual video on the time axis. For example, two frames that are originally successive to each other in time in p mode form two fields after being re-sampled, and then are interlaced to correspond to one frame in i mode. In this way, the frame in i mode includes two interlaced images at different time points.

The above situation brings about a problem to the VBL-based prediction framework. It is assumed that each frame in the BL includes a TOP field and a BOT field. When mapping the BL to the EL, it is found that if the BL has the same frame rate as the EL, each frame in the BL is corresponding to one frame in the EL, but the two fields of the frame in the EL are not both corresponding to corresponding frames in the EL on the time axis; instead, only one field is corresponding to that in the EL, and the other field is between time points of two successive frames in the EL.

According to different sampling time points of the TOP field and the BOT field in the original sequence, assuming that a field at an earlier time point is corresponding to the frame in the EL, and assuming that the TOP field is at an earlier time point, each TOP field is corresponding to a frame of the EL at the same time point, whereas the BOT field is not corresponding to any frame. According to the principles of inter-layer prediction that, the prediction should be preferably based on the frames at the same time point, it makes the prediction more accurate, especially for fast motion images. If the frames at different time points are employed in the prediction, the actual effect might be reversed. Therefore, the prediction method in the prior art shown in FIG. 1 of selecting and merging two fields into a VBL according to the coding mode thereof may reduce the compression and coding efficiencies for fast motion images.

In addition, in the i->p mode, the frame rate of the EL is generally the same as that of the BL before interlacing in actual applications, that is, one frame in the BL is corresponding to two frames in the EL, and the TOP field and the BOT field are respectively corresponding to one frame in the EL on the time axis. This is the most widely applied mode in actual applications. In this situation, according to the prior art, two fields are selected and merged into one VBL, which can merely be corresponding to one frame in the EL. As a result, the other frame in the EL cannot be predicted as it does not have a corresponding frame in the BL, and the inter-layer prediction cannot be realized, which is disadvantageous to the improvement of the compression efficiency.

Vieron, Bottreau, Francois, Lopez, JVT-RO14, Inter-layer prediction for scalable interlace/progressive video coding, 18th Meeting Bangkok, January 2006 discloses a video layered coding or decoding method in an interlaced mode, comprising: dividing an interlaced frame of a current layer into fields; determining a field in the current layer at the same time point as a frame in an upper layer according to a corresponding time relation on the time axis; and predicting the frame in the upper layer using the corresponding field at the same time point, so as to realize inter-layer predictive coding or decoding; wherein the current layer is a base layer and the upper layer is an enhanced layer.

### SUMMARY OF THE INVENTION

Accordingly, the present invention is directed to a video layered coding method and a coding and decoding device in an interlaced mode, which improve an inter-layer prediction efficiency in the interlaced mode, so as to further improve a video compression efficiency

To achieve the above objective, the present invention provides a video layered coding method in an interlaced mode, which includes the following steps: A frame of a current layer after interlacing is divided into fields; A field in the current layer at the same time point as a frame in an upper layer is determined according to a corresponding relation on a time axis; The frame in the upper layer is predicted through the corresponding filed at the same time point, so as to realize inter-layer predictive coding or decoding.

The following technical content of the method is an optional technical solution.

The current layer is a base layer (BL), and the upper layer is a first enhanced layer (EL) or another EL above the first EL.

When the current layer and the upper layer have the same frame rate, only one field in the fields divided from each frame of the current layer is corresponding to the frame of the upper layer, and is used in the inter-layer predictive coding or decoding.

When a frame rate of the current layer is half of that of the upper layer, two fields in the fields divided from each frame of the current layer are respectively corresponding to frames of the upper layer, and are used in the inter-layer predictive coding or decoding.

The method further includes determining to directly use the frame of the current layer after interlacing to perform the inter-layer predictive coding or decoding of a corresponding frame of the upper layer in time according to characteristics of video stream data to be coded or decoded.

The determining to directly use the frame of the current layer after interlacing to perform the inter-layer predictive coding and decoding of the corresponding frame of the upper layer in time according to characteristics of video stream data to be coded or decoded further includes the following steps: When the current layer and the upper layer have the same frame rate, each frame of the current layer is corresponding to only one frame of the upper layer, and is used in the inter-layer predictive coding or decoding; When a frame rate of the current layer is half of that of the upper layer, each frame of the current layer is corresponding to two successive frames of the upper layer, and is used in the inter-layer predictive coding or decoding.

The method further includes the following steps: A most efficient coding mode is adaptively selected according to inter-layer predictive coding efficiencies of an inter-layer predictive coding mode based on frames and an inter-layer predictive coding mode based on fields.

The predicting the frame in the upper layer through the corresponding filed at the same time point to realize inter-layer predictive coding or decoding includes: dividing texture information from the frame of the current layer where the field for the inter-layer prediction is located, obtaining the texture information about the field, and then zooming the texture information about the field to obtain texture information about a frame of the same size as the frame of the upper layer, and using the zoomed texture information to perform predictive coding or decoding of texture information about the corresponding frame of the upper layer; and dividing motion information from the frame of the current layer where the field for the inter-layer prediction is located, obtaining the motion information about the field, zooming the motion information about the field to obtain motion information about a frame of the same size as the frame of the upper layer, and using the zoomed motion information to perform predictive coding or decoding of motion information about the corresponding frame of the upper layer.

The predicting the frame in the upper layer through the corresponding filed at the same time point to realize inter-layer predictive coding or decoding includes: zooming the frame of the current layer where the field for inter-layer predictive coding or decoding is located, obtaining a frame of the same size as the frame of the upper layer, dividing texture information from the zoomed frame to obtain texture information about the field, and using the texture information about the field to perform the inter-layer predictive coding or decoding of texture information about the corresponding frame of the upper layer; and zooming the frame of the current layer where the field for inter-layer predictive coding or decoding is located, obtaining a frame of the same size as the frame of the upper layer, dividing motion information from the zoomed frame to obtain the motion information about the field, and using the motion information about the field to perform inter-layer predictive coding and decoding of motion information about the corresponding frame of the upper layer.

The dividing the motion information about the field from the motion information about the frame of the current layer further includes the following steps: If a corresponding macroblock pair in the frame is coded in a "field coding mode", the respective motion information about the macroblock pair is converted through a reference frame, and then is directly copied to a corresponding field respectively.

The dividing the motion information about the field from the motion information about the frame of the current layer further includes the following steps: If a corresponding macroblock pair in the frame is coded in a "frame coding mode", the motion information about the macroblock pair is combined and copied to all the divided fields, in which the motion information about the macroblock pair is combined according to the following rules.

When one macroblock in the macroblock pair is in an intra prediction mode and the other macroblock is not in the intra prediction mode, the motion information obtained through combination is invalid.

When two macroblocks of the macroblock pair are both in an inter prediction mode, the motion information of the macroblock pair is combined vertically, and a vertical length of an obtained motion information block is at least twice of that of a minimum motion information block.

When the macroblock pair in the inter prediction mode is combined, if the two macroblocks have different reference frames, the reference frame with a smaller value is taken as a reference frame after the combination, and an average value of motion vectors of the two macroblocks is taken as a motion vector after the combination.

The method further includes: sampling and interlacing two successive frames of the current layer to obtain an interlaced frame of the current layer, and using the interlaced frame to perform the inter-layer predictive coding or decoding of the frame of the upper layer at the corresponding time point, when the current layer is not in an interlaced mode but the upper layer is in the interlaced mode.

The method further includes: carrying indicating information about an inter-layer predictive coding manner in an inter-layer prediction code; in which when the inter-layer predictive decoding is performed, an inter-layer predictive decoding manner corresponding to the inter-layer predictive coding manner is used according to the indicating information.

The present invention further provides a coding and decoding device, which includes a dividing module and an inter-layer predictive coding or decoding module. The dividing module is adapted to divide an interlaced frame of a current layer into fields. The inter-layer predictive coding or decoding module is adapted to determine a field at the same time point as a frame of an upper layer from the fields of the current layer divided by the dividing module, predict the frame of the upper layer using the corresponding field at the same time point to perform the inter-layer predictive coding or decoding, and output coding or decoding results.

The following technical content of the coding and decoding device is an optional technical solution.

The coding and decoding device further includes a first determining module, adapted to determine that the frame of the current layer after interlacing is directly used to perform the inter-layer predictive coding and decoding of a corresponding frame of the upper layer in time according to characteristics of the video stream data to be coded or decoded, and notify the inter-layer predictive coding and decoding module; in which after receiving the notification from the first determining module, the inter-layer predictive coding and decoding module directly uses the frame of the current layer after interlacing to perform the inter-layer predictive coding or decoding of the corresponding frame of the upper layer in time.

The coding and decoding device further includes a second determining module. The inter-layer predictive coding and decoding module uses a divided field to perform the inter-layer predictive coding of a corresponding frame of the upper layer, and uses a frame of the current layer after interlacing to perform the inter-layer predictive coding of a corresponding frame of the upper layer in time. The second determining module determines efficiencies of the two inter-layer predictive coding modes adopted by the inter-layer predictive coding and decoding module, and adaptively controls the inter-layer predictive coding and decoding module to output an inter-layer predictive code with the highest efficiency.

The device further includes a combining module. When the current layer is not in an interlaced mode but the upper layer is in the interlaced mode, the combining module samples and interlaces two successive frames of the current layer to obtain an interlaced frame of the current layer. The inter-layer predictive coding and decoding module uses the interlaced frame generated by the combining module to perform the inter-layer predictive coding or decoding of a frame of the upper layer at a corresponding time point.

After comparison, it is found that the difference between the technical solutions of the present invention and that of the prior art lies in that, in the present invention, the interlaced frame of the BL is divided into fields in the i->p mode, and corresponding fields in time are used to predict frames of the EL according to the corresponding relationship on the time axis, and the whole process is reversed in the p->i mode, that is, two successive frames of the BL corresponding to two fields of the EL on the time axis are interlaced and combined to obtain one frame, and then the interlaced frame of the EL is predicted, so the combination process is just reversed to the process for dividing a frame into fields.

According to different characteristics of video streams, for example, static or rapidly-moving video streams, optional frame prediction methods are provided, that is, the interlaced frame is not selected to be divided into fields, but is directly used to predict the corresponding frame of the EL. According to this prediction method, the efficiency for predicting the static or slowly-moving image streams is relatively high, and thus, the frame prediction or field prediction may be selected according to the coding efficiency thereof.

When the inter-layer frame rate is consistent, the corresponding relationship in time is utilized to perform the prediction; and when the frame rates are not consistent, adjacent frames or fields on the time axis are used to perform the prediction.

In a specific inter-layer prediction process, the fields are used to form the prediction information about the corresponding frame, including the formation of the texture and motion information, so as to realize the inter-layer prediction.

The distinctive features of the above technical solutions bring an obvious beneficial effect, that is, the corresponding fields are used to perform the prediction according to the corresponding relationship on the time axis, so the prediction efficiency is relatively high, and the compression rate is further improved. As for the fast motion images, more significant effects can be achieved, the prediction is more accurate, and the compression efficiency is greatly improved.

Furthermore, when an optional process of directly using the interlaced frame to predict the corresponding frame on the time axis is adopted, the prediction may be realized through a predication manner based on corresponding fields, prediction manner based on corresponding frames, and adaptive prediction manner based on frames/fields. Since the prediction based on frames has a better effect than the prediction based on fields as for static images (that is because a frame is larger than a field in size, and the prediction based on frames is more accurate after interpolation and enlargement), the adaptive prediction based on frames/fields is applicable to both motion images and static images, automatically selects a better mode for prediction, realizes the highest inter-layer prediction efficiency, simplifies the structure of the system, and reduces the complexity.

The specific method for predicting the texture information and motion information achieves the objective of the field prediction, makes full use of the motion information and texture information of the BL effectively, improves the inter-layer prediction efficiency, improves the coding efficiency of the system, ensures the feasibility of the system, and enhances the reliability and compatibility of the system.

### BRIEF DESCRIPTION OF THE DRAWINGS

FIG. 1 is a schematic diagram of a principle of an SVC inter-layer prediction in an interlaced mode of the prior art;

FIG. 2 is a schematic diagram of a principle of an inter-layer prediction when frame rates are consistent according to a first embodiment of the present invention;

FIG. 3 is a schematic diagram of a principle of an inter-layer prediction when frame rates are inconsistent according to a second embodiment of the present invention;

FIG. 4 is a schematic diagram of forming motion information of an inter-layer prediction in a field coding mode according to a fifth embodiment of the present invention;

FIG. 5 is a schematic diagram of combining the motion information of the inter-layer prediction according to the fifth embodiment of the present invention; and

FIG. 6 is a schematic diagram of forming the motion information of the inter-layer prediction according to the fifth embodiment of the present invention.

### DETAILED DESCRIPTION OF THE EMBODIMENTS

To make the objectives, technical solutions, and advantages of the embodiments of the present invention more comprehensible, the present invention is described below in detail with reference to the accompanying drawings.

After the interlaced mode is introduced in the SVC, the inter-layer information prediction is somewhat changed. In the embodiments of the present invention, an inter-layer predictive coding and decoding method and a coding and decoding device in the interlaced mode are illustrated. Based on the corresponding relationship between layers, the present invention divides and combines frames and fields, and maps the information about frames and fields to an enhanced layer (EL) according to the corresponding relationship in time, and then performs the inter-layer predictive coding and decoding. The present invention improves the inter-layer predictive coding and decoding efficiency, and thus improves the compression efficiency of the system.

The process for implementing the inter-layer predictive decoding is similar to that of the inter-layer predictive coding, so only the inter-layer predictive coding is taken as an example below to demonstrate the technical solutions of the embodiments of the present invention, for the convenience of description.

In the embodiments of the present invention, the inter-layer predictive coding of an upper layer is realized by a current layer according to a corresponding relationship in time. After the interlaced mode is introduced, an interlaced frame of a base layer (BL) includes two fields at different time points. Therefore, according to the corresponding relationship between the time points of the fields, a field at a corresponding time point (for example, a TOP field) may be selected to predict a frame of the EL at the same time point. Before the inter-layer prediction, the size of the fields can be converted. For example, the TOP field is converted into a size of a frame of the BL through upsampling, and then converted to a size of a frame of the EL through interpolation and enlargement. Thus, the prediction becomes much more accurate, that is, the compression efficiency is greatly improved, especially for fast motion image streams.

There are still many extended technical solutions based on the key point of the corresponding relationship in time. For example, if a frame rate of the EL is twice of that of the BL, one interlaced frame of the BL is corresponding to two frames of the EL. At this time, in addition to the prediction based on the TOP field, another frame of the EL may be predicted through using a bottom (BOT) field. This solution is particularly suitable for the prediction when the rates are inconsistent, and has an obvious advantage as it almost doubles the prediction efficiency. Here, it should be noted that the BOT field must be at the same time point as the extra frame of the EL.

In addition, static images or slowly moving sequences may occur in a video stream. At this time, though the two fields (the TOP and BOT fields) of the BL are inconsistent on the time axis, the content thereof only varies from each other slightly, so the prediction efficiency is better if an entire interlaced frame is used for the prediction, that is because the interlaced frame does not need the upsampling motion, and the resolution is not reduced. Therefore, in an embodiment of the present invention, a frame prediction method is also illustrated. In the case that the resource of the processor allows, an embodiment of the present invention also adopts an adaptive prediction mechanism based on frames/fields, that is, both the frames and fields are used to perform the prediction at the same time, and the prediction method with better results is adopted.

Finally, in an embodiment of the present invention, a detailed inter-layer predictive coding method is further designed, which includes steps of converting motion information and texture information and inter-layer predictive coding. Moreover, as for the p->i mode, for example, the EL is interlaced, but the BL is not interlaced, it merely needs a process reversed to that of dividing a frame into fields, that is, two successive frames of the BL are combined and interlaced into one frame for the prediction.

To illustrate technical solutions of the embodiments of the present invention systematically, a plurality of embodiments are provided below hierarchically.

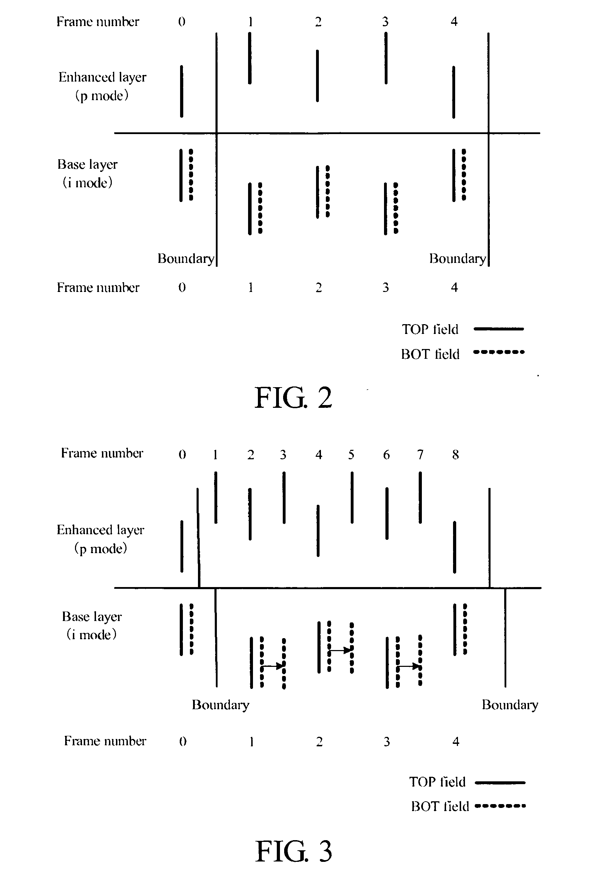

A first embodiment of the present invention includes a most basic technical solution, that is, the fields of the BL are used to perform the prediction according to the corresponding relationship in time. The most common i->p mode is taken as an example below to illustrate the first embodiment of the present invention. In the first embodiment, the BL layer is in i mode, and the EL is in p mode. A frame of the BL is formed by interlacing the TOP field and the BOT field, and both the BL and the EL have the same frame rate, that is, each frame of the BL is corresponding to one frame of the EL. In the i->p mode according to the first embodiment, a detailed process of the inter-layer predictive coding is shown in FIG. 2.

In FIG. 2, it is assumed that the BL has five frames, and the EL has five frames as well. Each frame of the BL is formed by a TOP field and a BOT field. Only one of the two fields of a frame of the BL is corresponding to a certain frame of the EL. According to different sampling time points of the TOP field and the BOT field in the original sequence, the field at an earlier time point is corresponding to a certain frame of the EL. Here, it is assumed that the TOP field is at an earlier time point, so the TOP field information is used in the inter-layer predictive coding.

In FIG. 2, the TOP field is marked by solid lines, and the BOT field is marked by dashed lines. As described above, the vertical resolution of the TOP field is half of the entire frame, so before the frame of the EL is predicted based on the TOP field, the TOP field must be interpolated vertically and enlarged to the resolution of the EL.

In the first embodiment, a entire process for the inter-layer predictive coding includes three basic steps: dividing a frame of the BL after interlacing into the fields, that is, the TOP field and the BOT field; determining a field at the same time point as the frame in the EL according to the corresponding relationship on the time axis, for example, the TOP field, which is determined according to the specific time sequence in actual applications; and using the TOP field to predict the frame in the EL to implement the inter-layer predictive coding.

Persons skilled in the art can understand that, in the above embodiment, for the convenience of description, the most common configuration is taken as an example. In actual applications, other configurations may also be used. For example, the fields divided from a frame of the BL are used to predict frames in upper and lower ELs, the interlaced frame is divided into more than two fields, and the field corresponding to a certain frame of the EL in time is the BOT field. The technical solution of the first embodiment is applicable to all of the above configurations, and the essence and scope of the first embodiment is not influenced by the different configurations.

In the first embodiment, indicating information for indicating an inter-layer predictive coding mode may be added to the inter-layer predictive code. For example, the indicating information of "using the TOP field of the BL to perform the inter-layer predictive coding of the frame of the EL" is added to the inter-layer predictive code. In this way, when performing the inter-layer predictive decoding, the TOP field of the BL is used directly to perform the inter-layer predictive decoding of the frame of the EL according to the indicating information. Certainly, the inter-layer predictive code may not carry the indicating information. At this time, when performing the inter-layer predictive decoding, the inter-layer predictive decoding may be implemented by using the process for the inter-layer predictive coding of the first embodiment according to a predetermined agreement between two ends. Here, the predetermined agreement may be an agreement made in advance about using a certain coding and decoding manner when a certain condition is satisfied. For example, the coding end and decoding end agree that the two ends use the TOP field of the BL to perform the inter-layer prediction of the frame of the EL when the BL and the EL have the same frame rate. Furthermore, the predetermined agreement may also be unconditioned, for example, the frame rates of the BL and the EL are not determined, and the two ends both use the TOP field of the BL to perform the inter-layer prediction of the frame of the EL. The meaning of the predetermined agreement mentioned in the descriptions of the following embodiments is the same as that of the predetermined agreement herein, and will not be described again.

In the i->p mode, when the EL and the BL have different frame rates, for example, if the frame rate of the BL is half of that of the EL, each frame of the EL is corresponding to one field of the BL according to the time sequence, which is the most widely applied mode in actual applications. Therefore, in FIG. 2, one frame is added between each two frames of the EL; however, there are frames of the BL corresponding to the additional frames, so they do not have the inter-layer prediction code either, which is disadvantageous to the improvement of the compression efficiency.

Accordingly, for the situation that the frame rates are inconsistent, in a second embodiment of the present invention, a method for using the BOT and TOP fields to predict respective corresponding frames of the EL is illustrated. For example, the TOP field is still corresponding to the frame of the EL as described in the first embodiment, and the BOT field is used to predict the additional frame of the EL according to the corresponding method. As shown in FIG. 3, the frames in the EL and the BL are sequentially aligned in the actual time sequence, and the BL is displayed separately in the TOP and BOT fields, that is, in the BL, the TOP field is marked by solid lines, and the BOT field is marked by dashed lines. The division of the TOP and BOT fields is marked by solid lines with arrows, and the frames in the BL are aligned with the frames of the EL according to the time sequence. According to the sequence of sampling time points of the TOP and BOT fields in the original sequence, a field at an earlier sampling time is placed in the front. Here, it is assumed that the TOP field is in the front. At this time, each field of the BL is used directly to perform the inter-layer predictive coding of the corresponding frame of the EL.

In FIG. 3, frames 0, 1, 2, 3, 4 of the BL are corresponding to frames 0, 2, 4, 6, 8 of the EL respectively, and frames 1, 3, 5, 7 of the EL do not have corresponding inter-layer predictive codes according to the present solutions because there are no frames of the BL corresponding to the frames 1, 3, 5, 7 of the EL. However, since the frames of the BL are divided, frames corresponding to the frames 1, 3, 5, 7 of the EL in time can be obtained, and BOT fields of the frames 1, 2, 3 of the BL can be divided to serve as the frames of the BL corresponding to the frames 3, 5, 7 of the EL respectively, thereby realizing the inter-layer predictive coding. The prediction across groups of pictures (GOPs) cannot be implemented, so the frame 0 of the BL cannot be divided to serve as a frame for the inter-layer predictive coding of the frame 1 of the EL. Similarly, the frame 4 of the BL cannot be divided to serve as a frame for the inter-layer predictive coding of the next GOP of the EL.

In the second embodiment, the indicating information for indicating the inter-layer predictive coding mode may be added to the inter-layer predictive code. For example, the indicating information about "using the TOP and BOT fields of the BL to perform the inter-layer predictive coding of the frame of the EL" is added to the inter-layer predictive code. In this way, when performing the inter-layer predictive decoding, the TOP and BOT fields of the BL are used directly to perform the inter-layer predictive decoding of the frame of the EL according to the indicating information. Certainly, the inter-layer predictive code may not carry the indicating information. At this time, when performing the inter-layer predictive decoding, the inter-layer predictive decoding may be implemented through using the process for the inter-layer predictive coding of the second embodiment according to a predetermined agreement between two ends.

When the frame rate of the BL is half of that of the EL, extra frames of the EL cannot be predicted since they do not have corresponding frames of the BL. When the image sequence is mainly static or changes slowly, difference of two successive frames of the EL is little. At this time, one frame of the BL can be used to perform the inter-layer predictive coding twice, that is, one interlaced frame of the BL is corresponding to two successive frames of the EL. Therefore, the technical solution according to a third embodiment of the present invention is to use one interlaced frame of the BL to perform the inter-layer predictive coding of two successive frames of the EL.

Generally, in the inter-layer predictive coding, as for a moving sequence, the effect of the field prediction is better, and as for a static or slowly changing sequence, the effect of the frame prediction is better. The frames 3, 5, 7 of the EL may also use the frames 1, 2, 3 or the BOT fields of the frames 1, 2, 3 of the BL as their corresponding frames of the BL.

In the third embodiment, the indicating information for indicating the inter-layer predictive coding mode may be added to the inter-layer predictive code. For example, the indicating information of "using a frame of the BL to perform the inter-layer predictive coding of two successive frames of the EL" is added to the inter-layer predictive code. In this way, when performing the inter-layer predictive decoding, a frame of the BL is used directly to perform the inter-layer predictive decoding of two successive frames of the EL according to the indicating information. Certainly, the inter-layer predictive code may not carry the indicating information as well. At this time, when performing the inter-layer predictive decoding, the inter-layer predictive decoding is implemented by using the process for the inter-layer predictive coding of the third embodiment according to a predetermined agreement between two ends.

As described above, when the video stream is motion images, the corresponding relationship on the time axis brings better effects to the inter-layer predictive coding. However, when the video stream is mainly a static or slowly moving image sequence, the offset on the time axis does not cause much change, that is, the images of two fields after interlacing do not vary much. The image of the entire interlaced frame can represent an image at the current time point. Therefore, in this embodiment of the present invention, the image of the entire frame is used to perform the inter-layer predictive coding. Compared with the inter-layer predictive coding based on fields, the inter-layer predictive coding based on the image of the entire frame is advantageous in that, the upsampling is not needed, the vertical resolution is not sacrificed, the complexity of the inter-layer predictive coding is lowered, and the coding system is simplified.

Since the field information is consistent with the corresponding frame of the EL in time, as for the moving interlaced sequence of the BL, the effect of the field prediction through using TOP field is better, and as for the static sequence, the effect of the frame prediction is better. Therefore, the fourth embodiment of the present invention includes three optional solutions.

A first solution is to use corresponding frames directly to perform the prediction, that is, frames 0, 1, 2, 3, 4 of the BL are used to predict frames 0, (2 and 3), (4 and 5), (6 and 7), 8 of the EL respectively, in which the frames of the BL are not divided into fields. This solution is applicable to the static image sequence or slowly moving image sequence.

A second solution is to use corresponding fields directly to perform the prediction, that is, TOP fields of frames 0, 1, 2, 3, 4 of the BL are used to predict frames 0, 2, 4, 6, 8 of the EL, and BOT fields are used to predict frames 3, 5, 7 of the EL. This solution is applicable to the moving image sequence.

A third solution is to use an adaptive prediction mechanism based on frames/fields. It is adaptively determined whether the frames or fields are used to perform the prediction, for example, the determining process based on the coding efficiency is to use both the frames and fields to perform the prediction respectively and to code the corresponding frames of the EL, and the prediction manner with a higher coding efficiency is adopted. Another example of the determining process is based on basic coding modes. When the BL is PAFF, if the BL uses the field coding, it indicates that the motion is rapid, so the inter-layer predictive coding based on fields has a better effect; on the contrary, the BL uses the frame coding, and the inter-layer predictive coding based on frames has a better effect. When the BL is MBAFF, a proportion P of all the macroblocks coded in the field coding mode in the BL is calculated, and when β is greater than a certain value, for example, greater than 50%, it indicates that the motion is rapid, so the inter-layer predictive coding based on fields is adopted; otherwise, the inter-layer predictive coding based on frames is adopted. Though this method consumes more processor resources, it achieves the best inter-layer predictive coding effect and the highest compression efficiency.

In the fourth embodiment, the indicating information for indicating the inter-layer predictive coding mode may be added to the inter-layer predictive code. For example, the indicating information of "using the field of the BL to perform the inter-layer predictive coding of the frame of the EL" or "using the frame of the BL to perform the inter-layer predictive coding of the frame of the EL" is added to the inter-layer predictive code. In this way, when performing the inter-layer predictive decoding, the field or frame of the BL is used directly to perform the inter-layer predictive decoding of the frame of the EL according to the indicating information. When performing the inter-layer predictive decoding, the adaptive predictive coding mode of the third solution does not exist.

A fifth embodiment of the present invention is described as follows. On the basis of the previous embodiments, the fifth embodiment provides details about a combination of texture information and motion information, which is a key step in the inter-layer predictive coding and decoding.

In the above embodiments, the frame or field of the BL corresponding to each frame of the EL can be obtained (in FIG. 3, the frame 1 of the EL is located out of the boundary). When the field of the BL corresponding to the frame of the EL is selected, different from using only the frame as the reference in the existing SVC coding system, the field is divided from the frame, so the texture information and motion information is reduced by one half vertically. However, as the prediction information, the field must be corresponding to the corresponding frame of the EL. Therefore, a process of downsampling, upsampling, and mode mapping needs to be performed, which have been described above. The conversion of the texture information and motion information involved in the above processes are described below, including the formation of the field prediction texture information and field prediction motion information, which will be described in the following embodiment.

(1) Formation of the field prediction texture information: The texture information of a field can be easily divided from the frame where the field is located, and then, an image zooming process of the SVC is used directly. When the horizontal and vertical proportion factors of the EL and the BL are Fh and Fv respectively, the field of the BL is zoomed by Fh and Fv*2 in the image level to obtain a frame of the same size as the frame of the EL, so as to perform the inter-layer texture prediction.

(2) The formation of the field prediction motion information is similar to the formation of the field prediction texture information: When a frame of the BL is divided into fields, the separation of the motion mode from the frame to the fields is performed first, and then the motion information is zoomed to form the corresponding prediction information of the EL. In particular, the motion information about the fields of the BL can be divided from the frame through the following manner.

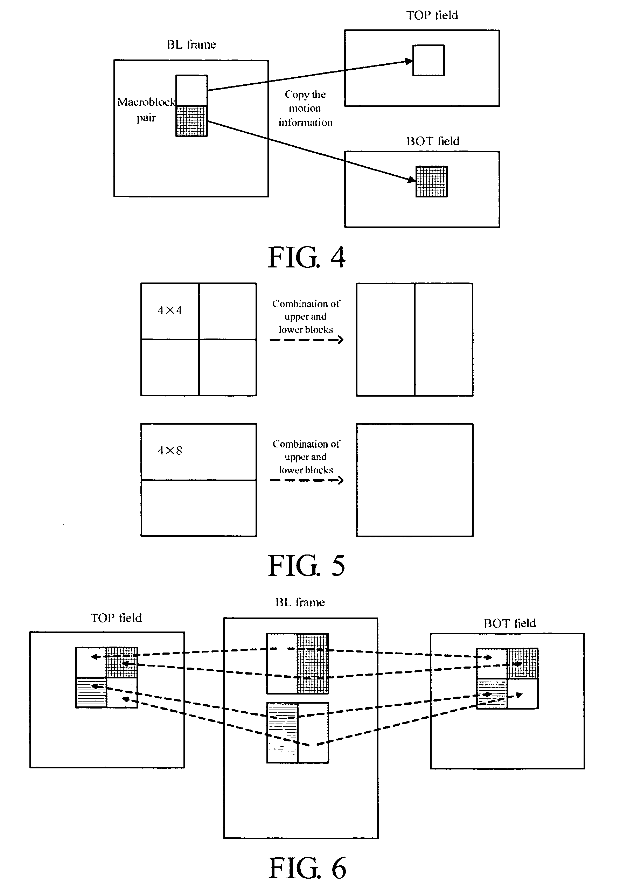

a. If the corresponding macroblock pair in the frame is coded according to fields, the motion vector and block mode of the macroblock pair of the BL to the TOP and BOT fields are directly copied to the corresponding fields, as shown in FIG. 4.

b. If the corresponding macroblock pair in the frame is coded according to the frame, it indicates that the macroblock pair does not move rapidly, the textures of the TOP and BOT fields are similar to each other, and the motion information about the two fields is interlaced. At this time, the motion information about the two fields is determined to be the same. When the macroblocks of the macroblock pair in the frame both use an intra mode for predicting, a prediction mode of the TOP and BOT fields is also the intra mode.

When one macroblock of the macroblock pair in the frame is in the intra mode, but the other one is not in the intra mode, a motion mode of the TOP and BOT fields is invalid, that is, no predictive motion information is available.

When the macroblocks of the macroblock pair in the frame both use the inter mode for predicting, a motion vector of the macroblock pair in the frame is vertically combined and categorized, which eliminates blocks with a vertical length of 4, and the blocks are combined into blocks with a vertical length of at least 8. The principle is as shown in FIG. 5.

In the combination, if the upper and lower blocks have different reference frames, the reference frame with a lower value is used, and the motion vector is an average value of those of the upper and lower blocks. After the combination, a corresponding relationship between the motion information about the frames and that about the fields is established, and the motion information of the field macroblock can be copied from the motion information of the corresponding block in the macroblock pair. The combination motion aims at mapping with at least one block in the field during the division. For example, a block with a size of x*y (y>4) exists in the macroblock, so the block in the corresponding field macroblock is x*(y/2). In addition to dividing the vertical information about the block by 2, the field macroblock copies all motion information in the corresponding macroblock pair.

FIG. 6 shows a corresponding relationship in the macroblocks. A macroblock pair is separated into four 8*16 blocks, and then, the motion vector and block mode of the TOP and BOT fields are respectively copied to the blocks of the corresponding field as shown in FIG. 6. Then, the process of zooming the motion information of the SVC is used directly. When the horizontal and vertical proportion factors of the EL and the BL are Fh and Fv respectively, the motion information about the field of the BL are enlarged by Fh and Fv*2 to obtain a frame of the same size as the frame of the EL. Then, the inter-layer prediction of the motion information is performed.

A sixth embodiment of the present invention illustrates a reversed process of performing the motion information prediction of the frame of the EL in the fifth embodiment. That is, in the sixth embodiment, the zooming process is performed at first, and the other operations are performed based on this resolution level. Particularly, when the motion information about the frame of the EL is predicted based on the motion information about the field, the process of zooming the motion information of the SVC is used to enlarge the field to the same size as the frame, and then the motion vectors are combined and mapped. The detailed procedures and manners for combining and mapping the motion vectors are the same as those of the fifth embodiment, but they are implemented at different resolution levels.

The above embodiments provide solutions directed to the circumstance that the BL is in the interlaced mode and the EL is in the frame coding mode. As described above, in actual applications, it is possible that the upper layer adopts the interlaced mode but the lower layer does not adopt the interlaced mode. For example, the BL is in p mode, and the EL is in i mode, that is, p->i mode. At this time, a seventh embodiment of the present invention provides a solution, that is, two successive frames of the BL are sampled and interlaced to obtain an interlaced frame of the BL, which is used to predict the corresponding frame of the EL.

Persons skilled in the art can understand that, the video coding and compression method for the inter-layer predictive coding between upper and lower layers has been described based on common configurations, which may vary in actual applications. For example, the inter-layer predictive coding may be performed between two adjacent layers, between two layers that are not adjacent to each other, or performed when the rates of the upper and lower layers are inconsistent, or when the upper layer is in i mode and the lower layer is in p mode, and the parameter configurations may be different accordingly. However, as for all of the previous situations, the solutions according to the embodiments of the present invention can realize the inter-layer predictive coding, complete the inter-layer predictive coding precisely, improve the compression efficiency of the video coding for fast motion images, slow motion images, or static images, reduce the system complexity, and simplify the coding and decoding mechanism.

The coding and decoding device according to an embodiment of the present invention includes a dividing module and an inter-layer predictive coding and decoding module. Optionally, the coding and decoding device further includes a first determining module and a second determining module.

The dividing module is adapted to divide a frame of a current layer into fields after interlacing, for example, into a TOP field and a BOT field. The inter-layer predictive coding and decoding module is adapted to determine a field at the same time point as a frame of an upper layer from the fields of the current layer divided by the dividing module, predict the frame of the upper layer through using the corresponding field at the same time point to perform the inter-layer predictive coding and decoding, and output coding and decoding results.

The current layer may be a BL, and the upper layer may be an EL. The current layer and the upper layer may be adjacent layers, or layers not adjacent to each other. Then, the BL and EL are taken as examples below to illustrate the coding and decoding device according to the embodiment of the present invention.

The first determining module is adapted to determine frame rates of the EL and the BL, and provide a determined result to the inter-layer predictive coding and decoding module and the dividing module.

After receiving the information about the determined result that the frame rates of the EL and the BL are consistent from the first determining module, the dividing module may not divide the frame of the BL. At this time, after receiving the information about the determined result that the frame rates of the EL and the BL are consistent from the first determining module, the inter-layer predictive coding and decoding module uses the frame of the BL to perform the inter-layer predictive coding of the frame of the EL. After receiving the information about the determined result that the frame rates of the EL and the BL are consistent from the first determining module, the dividing module may also divide the frame of the BL. At this time, the inter-layer predictive coding and decoding module may use the TOP or BOT field divided by the dividing module to perform the inter-layer predictive coding of the frame of the EL, or use the frame of the BL to perform the inter-layer predictive coding of the frame of the EL.

After receiving the information about the determined result that the frame rate of the EL is twice of that of the BL from the first determining module, the dividing module may not divide the frame of the BL. At this time, after receiving the information about the determined result that the frame rate of the EL is twice of that of the BL from the first determining module, the inter-layer predictive coding and decoding module uses one frame of the BL to perform the inter-layer predictive coding of two successive frames of the EL. After receiving the information about the determined result that the frame rate of the EL is twice of that of the BL from the first determining module, the dividing module may also divide the frame of the BL. At this time, after receiving the information about the determined result that the frame rate of the EL is twice of that of the BL from the first determining module, the inter-layer predictive coding and decoding module uses the TOP and BOT fields divided by the dividing module or use one frame of the BL to perform the inter-layer predictive coding of two successive frames of the EL.

In the case that the resource of the processor in the coding and decoding device allows, the coding and decoding device may also use an adaptive inter-layer predictive coding mechanism based on frames/fields. That is, the inter-layer predictive coding and decoding module uses both the frames and fields to perform the inter-layer predictive coding, and then the second determining module determines the inter-layer predictive coding efficiencies of the two inter-layer predictive coding modes of the inter-layer predictive coding and decoding module, and controls the inter-layer predictive coding and decoding module to output the inter-layer predictive code with a higher coding efficiency.

In the inter-layer predictive coding process of the inter-layer predictive coding and decoding module, the inter-layer predictive coding and decoding module processes the inter-layer predictive code such as the motion information and texture information as described in the above embodiments, which will not be described again here.

The coding and decoding device according to the embodiment of the present invention further includes a combining module. For the p->i mode, for example, the EL is interlaced but the BL is not interlaced. At this time, the combining module combines and interlaces two successive frames of the BL into one frame, and the inter-layer predictive coding and decoding module uses the frame generated by the combining module to perform the inter-layer predictive coding of the frame of the EL.

In the above mode, before outputting the inter-layer predictive code, the inter-layer predictive coding and decoding module may carry the indicating information for indicating the inter-layer predictive coding mode in the inter-layer predictive code. In this way, when performing the inter-layer predictive decoding on the received code stream, the inter-layer predictive coding and decoding module obtains the inter-layer predictive coding mode according to the indicating information, and then uses a mode corresponding to the inter-layer predictive coding mode to perform the inter-layer predictive decoding. For example, when the indicating information is "using the TOP field of the BL to perform the inter-layer predictive coding of the frame of the EL", the inter-layer predictive coding and decoding module uses the TOP field of the BL to perform the inter-layer predictive decoding of the frame of the EL. The detailed content of the indicating information is as described in the above embodiments of the method of the present invention.

When performing the inter-layer predictive decoding, the coding and decoding device does not need the second determining module, that is, the inter-layer predictive decoding process does not involve the adaptive inter-layer predictive decoding mechanism.

## Claims

1. A video layered coding or decoding method in an interlaced mode, comprising:
dividing an interlaced frame of a current layer into fields;
determining a field in the current layer at the same time point as a frame in an upper layer according to a corresponding time relation on the time axis; and
predicting the frame in the upper layer using the corresponding field at the same time point, so as to realize inter-layer predictive coding or decoding;
wherein the current layer is a base layer, BL, and the upper layer is a first enhanced layer, EL or another EL above the first EL;
**characterized in that** the corresponding field at the same time point is only the field in the current layer corresponding to the frame of the upper layer.

2. The method according to claim 1, **characterized in**:
when the current layer and the upper layer have a same frame rate, only one field in the fields divided from each frame of the current layer is corresponding to the frame of the upper layer, and is used in inter-layer predictive coding or decoding; or
when a frame rate of the current layer is half of that of the upper layer, two fields in the fields divided from each frame of the current layer are respectively corresponding to frames of the upper layer, and are used for inter-layer predictive coding or decoding.

3. The method according to claim 2, **characterized in** determining to use the interlaced frame of the current layer to perform the inter-layer predictive coding or decoding of the corresponding frame of the upper layer in time according to characteristics of video stream data to be coded or decoded further comprises:
adaptively selecting a most efficient coding mode according to inter-layer predictive coding efficiencies of an inter-layer predictive coding mode based on frames and an inter-layer predictive coding mode based on fields.

4. The method according to claim 1, **characterized in** predicting the frame in the upper layer using the corresponding filed at the same time point to realize inter-layer predictive coding or decoding comprises:
dividing texture information from the frame of the current layer where the field for the inter-layer prediction is located, obtaining the texture information about the field, and then zooming the texture information about the field to obtain texture information about a frame of the same size as the frame of the upper layer, and using the zoomed texture information to perform predictive coding or decoding of texture information about the corresponding frame of the upper layer; and
dividing motion information from the frame of the current layer where the field for the inter-layer prediction is located, obtaining the motion information about the field, and then zooming the motion information about the field to obtain motion information about a frame of the same size as the frame of the upper layer, and using the zoomed motion information to perform predictive coding and decoding of motion information about the corresponding frame of the upper layer.

5. The method according to claim 1, **characterized in** predicting the frame in the upper layer using the corresponding filed at the same time point to realize inter-layer predictive coding or decoding further comprises:
zooming the frame of the current layer where the field for inter-layer predictive coding or decoding is located, obtaining a frame of the same size as the frame of the upper layer, dividing texture information from the zoomed frame to obtain texture information about the field, and using the texture information about the field to perform inter-layer predictive coding or decoding of texture information about the corresponding frame of the upper layer; and
zooming the frame of the current layer where the field for inter-layer predictive coding or decoding is located, obtaining a frame of the same size as the frame of the upper layer, dividing motion information from the zoomed frame to obtain the motion information about the field, and using the motion information about the field to perform inter-layer predictive coding or decoding of motion information about the corresponding frame of the upper layer.

6. The method according to claim 4 or 5, **characterized in** the dividing the motion information about the field from the motion information about the frame of the current layer comprising:
if a corresponding macroblock pair in the frame is coded in a "field coding mode", the respective motion information about the macroblock pair is converted through a reference frame, and then is directly copied to a corresponding field respectively.

7. The method according to claim 4 or 5, **characterized in** the dividing the motion information about the field from the motion information about the frame of the current layer comprising:
if a corresponding macroblock pair in the frame is coded in a "frame coding mode", the motion information about the macroblock pair is combined and copied to all the divided fields, and the motion information about the macroblock pair is combined according to following rules:
when one macroblock in the macroblock pair is in an intra prediction mode and the other macroblock is not in the intra prediction mode, the motion information obtained through combination is invalid; or
when two macroblocks of the macroblock pair are both in an inter prediction mode, the motion information about the macroblock pair is combined vertically, and a vertical length of an obtained motion information block is at least twice of that of a minimum motion information block, wherein when the macroblock pair in the inter prediction mode is combined, if the two macroblocks have different reference frames, the reference frame with a smaller value is taken as a reference frame after the combination, and an average value of motion vectors of the two macroblocks is taken as a motion vector after the combination.

8. The method according to any one of claims 1 to 5, **characterized in** further comprising: sampling and interlacing two successive frames of the current layer to obtain an interlaced frame of the current layer, and using the interlaced frame to perform the inter-layer predictive coding or decoding of the frame of the upper layer at the corresponding time point, when the current layer is not in an interlaced mode but the upper layer is in the interlaced mode.

9. The method according to any one of claims 1 to 5, **characterized in** further comprising: carrying indicating information about an inter-layer predictive coding manner in an inter-layer prediction code, wherein when the inter-layer predictive decoding is performed, an inter-layer predictive decoding manner corresponding to the inter-layer predictive coding manner is used according to the indicating information.

10. A coding and decoding device, **characterized in** comprising: a dividing module and an inter-layer predictive coding and decoding module, wherein
the dividing module is adapted to divide an interlaced frame of a current layer into fields; and
the inter-layer predictive coding and decoding module is adapted to determine a field in the current layer at the same time point as a frame of an upper layer from the fields of the current layer divided by the dividing module, predict the frame of the upper layer using the corresponding field at the same time point to perform the inter-layer predictive coding and decoding, and output coding and decoding results;
wherein the corresponding field at the same time point is only the field in the current layer corresponding to the frame of the upper layer and wherein the current layer is a base layer, BL, and the upper layer is a first enhanced layer, EL or another EL above the first EL.

11. The device according to claim 10, **characterized in** further comprising: a first determining module, adapted to determine that the interlaced frame of the current layer is used to perform the inter-layer predictive coding or decoding of a corresponding frame of the upper layer in time according to characteristics of the video stream data to be coded or decoded, and notify the inter-layer predictive coding and decoding module; wherein after receiving the notification from the first determining module, the inter-layer predictive coding and decoding module uses the interlaced frame of the current layer to perform the inter-layer predictive coding or decoding of the corresponding frame of the upper layer in time;
wherein to determine that the interlaced frame of the current layer is used to perform the inter-layer predictive coding or decoding of a corresponding frame of the upper layer in time according to characteristics of the video stream data to be coded or decoded comprises:
when the current layer and the upper layer have the same frame rate, each frame of the current layer is corresponding to only one frame of the upper layer, and is used for the inter-layer predictive coding or decoding; or
when a frame rate of the current layer is half of that of the upper layer, each frame of the current layer is corresponding to two successive frames of the upper layer, and is used in the inter-layer predictive coding or decoding.

12. The device according to claim 11, **characterized in** further comprising: a second determining module, wherein the inter-layer predictive coding and decoding module uses a divided field to perform the inter-layer predictive coding of a corresponding frame of the upper layer, and uses an interlaced frame of the current layer to perform the inter-layer predictive coding of a corresponding frame of the upper layer in time; and the second determining module is adapted to determine efficiencies of the two inter-layer predictive coding modes adopted by the inter-layer predictive coding and decoding module, and adaptively control the inter-layer predictive coding and decoding module to output an inter-layer prediction code with highest efficiency.

13. The device according to claim 10, **characterized in** further comprising: a combining module, wherein when the current layer is not in an interlaced mode but the upper layer is in the interlaced mode, the combining module samples and interlaces two successive frames of the current layer to obtain an interlaced frame of the current layer; and the inter-layer predictive coding and decoding module uses the interlaced frame generated by the combining module to perform the inter-layer predictive coding or decoding of a frame of the upper layer at a corresponding time point.

## Patentansprüche

1. Videoschicht-Codierungs- oder Decodierungsverfahren in einem Zeilensprungmodus, das die folgenden Schritte aufweist:
Unterteilen eines Zeilensprungrahmens einer gegenwärtigen Schicht in Felder;
Bestimmen eines Felds in der gegenwärtigen Schicht zum selben Zeitpunkt wie ein Rahmen in einer oberen Schicht gemäß einer entsprechenden Zeitbeziehung auf der Zeitachse; und
Vorhersagen des Rahmens in der oberen Schicht mittels des entsprechenden Felds zum selben Zeitpunkt, um eine Zwischenschicht-Prädiktionscodierung oder -Decodierung zu verwirklichen;
wobei die gegenwärtige Schicht eine Basisschicht, BL, und die obere Schicht eine erste verbesserte Schicht, EL, oder eine andere EL über der ersten EL ist;
**dadurch gekennzeichnet, dass** das entsprechende Feld zum selben Zeitpunkt nur das Feld in der gegenwärtigen Schicht ist, das dem Rahmen der oberen Schicht entspricht.

2. Verfahren nach Anspruch 1, **dadurch gekennzeichnet, dass**:
wenn die gegenwärtige Schicht und die obere Schicht dieselbe Rahmenfrequenz aufweisen, nur ein Feld der Felder, in die jeder Rahmen der gegenwärtigen Schicht unterteilt ist, dem Rahmen der oberen Schicht entspricht und in der Zwischenschicht-Prädiktionscodierung oder -Decodierung verwendet wird; oder
wenn eine Rahmenfrequenz der gegenwärtigen Schicht die Hälfte der oberen Schicht beträgt, zwei Felder der Felder, in die jeder Rahmen der gegenwärtigen Schicht unterteilt ist, jeweils Rahmen der oberen Schicht entsprechen, und zur Zwischenschicht-Prädiktionscodierung oder -Decodierung verwendet werden.

3. Verfahren nach Anspruch 2, **dadurch gekennzeichnet, dass** das Bestimmen, den Zeilensprungrahmen der gegenwärtigen Schicht zu verwenden, um die Zwischenschicht-Prädiktionscodierung oder -Decodierung des entsprechenden Rahmens der oberen Schicht rechtzeitig gemäß Eigenschaften von Videostromdaten durchzuführen, die codiert oder decodiert werden sollen, ferner Folgendes aufweist:
adaptives Auswählen einer leistungsfähigsten Codierungsart gemäß der Zwischenschicht-Prädiktionscodierungsleistungsfähigkeit einer Zwischenschicht-Prädiktionscodierungsart beruhend auf Rahmen und einer Zwischenschicht-Prädiktionscodierungsart beruhend auf Feldern.

4. Verfahren nach Anspruch 1, **dadurch gekennzeichnet, dass** das Vorhersagen des Rahmens in der oberen Schicht mittels des entsprechenden Felds zum selben Zeitpunkt, um eine Zwischenschicht-Prädiktionscodierung oder -Decodierung zu verwirklichen, Folgendes aufweist:
Unterteilen von Texturinformationen aus dem Rahmen der gegenwärtigen Schicht, wo sich das Feld für die Zwischenschicht-Prädiktion befindet, Erhalten der Texturinformationen über das Feld, und dann Zoomen der Texturinformationen über das Feld, um Texturinformationen über einen Rahmen derselben Größe wie der Rahmen der oberen Schicht zu erhalten, und mittels der gezoomten Texturinformationen eine Prädiktionscodierung oder -Decodierung der Texturinformationen über den entsprechenden Rahmen der oberen Schicht durchzuführen; und
Unterteilen von Bewegungsinformationen aus dem Rahmen der gegenwärtigen Schicht, wo sich das Feld für die Zwischenschicht-Prädiktion befindet, Erhalten der Bewegungsinformationen über das Feld, und dann Zoomen der Bewegungsinformationen über das Feld, um Bewegungsinformationen über einen Rahmen derselben Größe wie der Rahmen der oberen Schicht zu erhalten und mittels der gezoomten Bewegungsinformationen eine Prädiktionscodierung und -Decodierung von Bewegungsinformationen über den entsprechenden Rahmen der oberen Schicht durchzuführen.

5. Verfahren nach Anspruch 1, **dadurch gekennzeichnet, dass** das Vorhersagen des Rahmens in der oberen Schicht mittels des entsprechenden Felds zum selben Zeitpunkt, um eine Zwischenschicht-Prädiktionscodierung oder -Decodierung zu verwirklichen, ferner Folgendes aufweist:
Zoomen des Rahmens der gegenwärtigen Schicht, wo sich das Feld zur Zwischenschicht-Prädiktionscodierung oder -Decodierung befindet, Erhalten eines Rahmens derselben Größe wie der Rahmen der oberen Schicht, Unterteilen von Texturinformationen aus dem gezoomten Rahmen, um Texturinformationen über das Feld zu erhalten und mittels der Texturinformationen über das Feld eine Zwischenschicht-Prädiktionscodierung oder -Decodierung von Texturinformationen über den entsprechenden Rahmen der oberen Schicht durchzuführen; und
Zoomen des Rahmens der gegenwärtigen Schicht, wo sich das Feld zur Zwischenschicht-Prädiktionscodierung oder -Decodierung befindet, Erhalten eines Rahmens derselben Größe wie der Rahmen der oberen Schicht, Unterteilen von Bewegungsinformationen aus dem gezoomten Rahmen, um die Bewegungsinformationen über das Feld zu erhalten und mittels der Bewegungsinformationen über das Feld eine Zwischenschicht-Prädiktionscodierung oder -Decodierung von Bewegungsinformationen über den entsprechenden Rahmen der oberen Schicht durchzuführen.

6. Verfahren nach Anspruch 4 oder 5, **dadurch gekennzeichnet, dass** das Unterteilen der Bewegungsinformationen über das Feld aus den Bewegungsinformationen über den Rahmen der gegenwärtigen Schicht Folgendes aufweist:
wenn ein entsprechendes Makroblockpaar im Rahmen in einer "Feldcodierungsart" codiert ist, werden die jeweiligen Bewegungsinformationen über das Makroblockpaar durch einen Bezugsrahmen umgewandelt und werden dann jeweils direkt in ein entsprechendes Feld kopiert.

7. Verfahren nach Anspruch 4 oder 5, **dadurch gekennzeichnet, dass** das Unterteilen der Bewegungsinformationen über das Feld aus den Bewegungsinformationen über den Rahmen der gegenwärtigen Schicht Folgendes aufweist:
wenn ein entsprechendes Makroblockpaar im Rahmen in einer "Feldcodierungsart" codiert ist, werden die Bewegungsinformationen über das Makroblockpaar kombiniert und in alle unterteilten Felder kopiert, und die Bewegungsinformationen über das Makroblockpaar werden gemäß folgenden Regeln kombiniert:
wenn sich ein Makroblock im Makroblockpaar in einem Intraprädiktionsmodus befindet und der andere Makroblock sich nicht im Intraprädiktionsmodus befindet, sind die durch Kombination erhaltenen Bewegungsinformationen ungültig; oder
wenn sich zwei Makroblöcke des Makroblockpaars beide in einem Interprädiktionsmodus befinden, werden die Bewegungsinformationen über das Makroblockpaar vertikal kombiniert, und eine vertikale Länge eines erhaltenen Bewegungsinformationsblocks beträgt mindestens das Doppelte eines minimalen Bewegungsinformationsblocks, wobei wenn das Makroblockpaar im Interprädiktionsmodus kombiniert wird, wenn die beiden Makroblöcke unterschiedliche Bezugsrahmen aufweisen, wird der Bezugsrahmen mit einem kleineren Wert als ein Bezugsrahmen nach der Kombination genommen, und ein Mittelwert der Bewegungsvektoren der beiden Makroblöcke wird als ein Bewegungsvektor nach der Kombination genommen.

8. Verfahren nach einem der Ansprüche 1 bis 5, **dadurch gekennzeichnet, dass** es ferner Folgendes aufweist: Abtasten und Verschränken zweier aufeinander folgender Rahmen der gegenwärtigen Schicht, um einen Zeilensprungrahmen der gegenwärtigen Schicht zu erhalten und mittels des Zeilensprungrahmens die Zwischenschicht-Prädiktionscodierung oder -Decodierung des Rahmens der oberen Schicht zum entsprechenden Zeitpunkt durchzuführen, wenn sich die gegenwärtige Schicht nicht in einem Zeilensprungmodus befindet, sondern sich die obere Schicht im Zeilensprungmodus befindet.

9. Verfahren nach einem der Ansprüche 1 bis 5, **dadurch gekennzeichnet, dass** es ferner Folgendes aufweist: Befördern von Anzeigeinformationen über eine Zwischenschicht-Prädiktionscodierungsart in einem Zwischenschicht-Prädiktionscode, wobei wenn die Zwischenschicht-Prädiktions-Decodierung durchgeführt wird, eine Zwischenschicht-Prädiktionsdecodierungsart, die der Zwischenschicht-Prädiktionscodierungsart entspricht, gemäß den Anzeigeinformationen verwendet wird.

10. Codierungs- und Decodierungsvorrichtung, **dadurch gekennzeichnet, dass** sie Folgendes aufweist: ein Unterteilungsmodul und ein Zwischenschicht-Prädiktionscodierungs- und -Decodierungsmodul, wobei
das Unterteilungsmodul eingerichtet ist, einen Zeilensprungrahmen einer gegenwärtigen Schicht in Felder zu unterteilen; und
das Zwischenschicht-Prädiktionscodierungs- und -Decodierungsmodul eingerichtet ist, ein Feld in der gegenwärtigen Schicht zum selben Zeitpunkt wie ein Rahmen einer oberen Schicht aus den durch das Unterteilungsmodul unterteilten Feldern der gegenwärtigen Schicht zu bestimmen, der Rahmen der oberen Schicht mittels des entsprechenden Felds zum selben Zeitpunkt vorherzusagen, um die Zwischenschicht-Prädiktionscodierung und -Decodierung durchzuführen, und Codierungs- und Decodierungsergebnisse auszugeben;
wobei das entsprechende Feld zum selben Zeitpunkt nur das Feld in der gegenwärtigen Schicht ist, das dem Rahmen der oberen Schicht entspricht, und wobei die gegenwärtige Schicht eine Basisschicht, BL, ist, und die obere Schicht eine erste verbesserte Schicht, EL, oder eine andere EL über der ersten EL ist.

11. Vorrichtung nach Anspruch 10, **dadurch gekennzeichnet, dass** sie ferner Folgendes aufweist: ein erstes Bestimmungsmodul, das eingerichtet ist, zu bestimmen, dass der Zeilensprungrahmen der gegenwärtigen Schicht verwendet wird, die Zwischenschicht-Prädiktionscodierung oder -Decodierung eines entsprechenden Rahmens der oberen Schicht rechtzeitig gemäß Eigenschaften der Videostromdaten durchzuführen, die codiert oder decodiert werden sollen, und das Zwischenschicht-Prädiktionscodierungs- und -Decodierungsmodul zu benachrichtigen; wobei nach dem Empfang der Benachrichtigung vom ersten Bestimmungsmodul das Zwischenschicht-Prädiktionscodierungs- und -Decodierungsmodul den Zeilensprungrahmen der gegenwärtigen Schicht verwendet, um rechtzeitig die Zwischenschicht-Prädiktionscodierung oder -Decodierung des entsprechenden Rahmens der oberen Schicht durchzuführen;
wobei das Bestimmen, dass der Zeilensprungrahmen der gegenwärtigen Schicht verwendet wird, um rechtzeitig die Zwischenschicht-Prädiktionscodierung oder -Decodierung eines entsprechenden Rahmens der oberen Schicht gemäß Eigenschaften der Videostromdaten durchzuführen, die codiert oder decodiert werden sollen, Folgendes aufweist:
wenn die gegenwärtige Schicht und die obere Schicht dieselbe Rahmenfrequenz aufweisen, jeder Rahmen der gegenwärtigen Schicht nur einem Rahmen der oberen Schicht entspricht und für die Zwischenschicht-Prädiktionscodierung oder -Decodierung verwendet wird; oder
wenn eine Rahmenfrequenz der gegenwärtigen Schicht die Hälfte der oberen Schicht beträgt, jeder Rahmen der gegenwärtigen Schicht zwei aufeinander folgenden Rahmen der oberen Schicht entspricht und in der Zwischenschicht-Prädiktionscodierung oder -Decodierung verwendet wird.

12. Vorrichtung nach Anspruch 11, **dadurch gekennzeichnet, dass** sie ferner Folgendes aufweist: ein zweites Bestimmungsmodul, wobei das Zwischenschicht-Prädiktionscodierungs- und -Decodierungsmodul ein unterteiltes Feld verwendet, um die Zwischenschicht-Prädiktionscodierung eines entsprechenden Rahmens der oberen Schicht durchzuführen, und einen Zeilensprungrahmen der gegenwärtigen Schicht verwendet, um rechtzeitig die Zwischenschicht-Prädiktionscodierung eines entsprechenden Rahmens der oberen Schicht durchzuführen; und das zweite Bestimmungsmodul eingerichtet ist, die Leistungsfähigkeit der beiden Zwischenschicht-Prädiktionscodierungsarten zu bestimmen, die durch das Zwischenschicht-Prädiktionscodierungs- und -Decodierungsmodul angewendet werden, und adaptiv das Zwischenschicht-Prädiktionscodierungs- und -Decodierungsmodul zu steuern, einen Zwischenschicht-Prädiktionscode mit der höchsten Leistungsfähigkeit auszugeben.

13. Vorrichtung nach Anspruch 10, **dadurch gekennzeichnet, dass** sie ferner Folgendes aufweist: ein Kombinationsmodul, wobei wenn sich die gegenwärtige Schicht nicht in einem Zeilensprungmodus befindet, sondern sich die obere Schicht im Zeilensprungmodus befindet, das Kombinationsmodul zwei aufeinander folgende Rahmen der gegenwärtigen Schicht abtastet und verschränkt, um einen Zeilensprungrahmen der gegenwärtigen Schicht zu erhalten; und das Zwischenschicht-Prädiktionscodierungs- und -Decodierungsmodul den durch das Kombinationsmodul erzeugten Zeilensprungrahmen verwendet, um die Zwischenschicht-Prädiktionscodierung oder -Decodierung eines Rahmens der oberen Schicht zu einem entsprechenden Zeitpunkt durchzuführen.

## Revendications

1. Procédé de codage ou de décodage vidéo au niveau d'une pluralité de couches dans un mode entrelacé, comprenant les étapes suivantes :
diviser une trame entrelacée d'une couche courante en champs ;
déterminer un champ dans la couche courante au même point de temps qu'une trame dans une couche supérieure selon une relation de temps correspondante sur l'axe des temps ; et
prédire la trame dans la couche supérieure en utilisant le champ correspondant au même point de temps, afin de réaliser un codage ou un décodage prédictif intercouche ;
la couche courante étant une couche de base, BL, et la couche supérieure étant une première couche améliorée, EL ou un autre EL situé au-dessus du premier EL ;
**caractérisé en ce que** le champ correspondant au même point de temps est uniquement le champ dans la couche courante correspondant à la trame de la couche supérieure.

2. Procédé selon la revendication 1, **caractérisé en ce que** :
lorsque la couche courante et la couche supérieure ont un même taux de trame, seul un champ dans les champs divisés à partir de chaque trame de la couche courante correspond à la trame de la couche supérieure, et est utilisé dans un codage ou un décodage prédictif intercouche ; ou
lorsqu'un taux de trame de la couche courante est la moitié de celui de la couche supérieure, deux champs dans les champs divisés à partir de chaque trame de la couche courante correspondent respectivement aux trames de la couche supérieure, et sont utilisés pour un codage ou un décodage prédictif intercouche.

3. Procédé selon la revendication 2, **caractérisé en ce que** l'étape consistant à déterminer d'utiliser la trame entrelacée de la couche courante pour exécuter le codage ou le décodage prédictif intercouche de la trame correspondante de la couche supérieure dans le temps selon des caractéristiques de données de flux vidéo à coder ou à décoder comprend en outre :
sélectionner de manière adaptative un mode de codage plus efficace selon l'efficacité de codage prédictif intercouche d'un mode de codage prédictif intercouche basé sur des trames et d'un mode de codage prédictif intercouche basé sur des champs.

4. Procédé selon la revendication 1, **caractérisé en ce que** l'étape consistant à prédire la trame dans la couche supérieure en utilisant le champ correspondant au même point de temps pour réaliser un codage ou un décodage prédictif intercouche comprend :
diviser des informations de texture à partir de la trame de la couche courante dans laquelle le champ pour la prédiction intercouche est situé, obtenir les informations de texture concernant le champ, puis zoomer les informations de texture concernant le champ pour obtenir des informations de texture concernant une trame de la même taille que la trame de la couche supérieure, et utiliser les informations de texture zoomées pour exécuter un codage ou un décodage prédictif des informations de texture concernant la trame correspondante de la couche supérieure ; et
diviser des informations de mouvement à partir de la trame de la couche courante dans laquelle le champ pour la prédiction intercouche est situé, obtenir les informations de mouvement concernant le champ, puis zoomer les informations de mouvement concernant le champ pour obtenir des informations de mouvement concernant une trame de la même taille que la trame de la couche supérieure, et utiliser les informations de mouvement zoomées pour exécuter un codage et un décodage prédictifs des informations de mouvement concernant la trame correspondante de la couche supérieure.

5. Procédé selon la revendication 1, **caractérisé en ce que** l'étape consistant à prédire la trame dans la couche supérieure en utilisant le champ correspondant au même point de temps pour réaliser un codage ou un décodage prédictif intercouche comprend en outre :
zoomer la trame de la couche courante dans laquelle le champ pour un codage ou un décodage prédictif intercouche est situé, obtenir une trame de la même taille que la trame de la couche supérieure, diviser des informations de texture à partir de la trame zoomée pour obtenir des informations de texture concernant le champ, et utiliser les informations de texture concernant le champ pour exécuter un codage ou un décodage prédictif intercouche des informations de texture concernant la trame correspondante de la couche supérieure ; et
zoomer la trame de la couche courante dans laquelle le champ pour un codage ou un décodage prédictif intercouche est situé, obtenir une trame de la même taille que la trame de la couche supérieure, diviser des informations de mouvement à partir de la trame zoomée pour obtenir les informations de mouvement concernant le champ, et utiliser les informations de mouvement concernant le champ pour exécuter un codage ou un décodage prédictif intercouche des informations de mouvement concernant la trame correspondante de la couche supérieure.

6. Procédé selon la revendication 4 ou 5, **caractérisé en ce que** l'étape consistant à diviser les informations de mouvement concernant le champ à partir des informations de mouvement concernant la trame de la couche courante comprend :
si une paire de macroblocs correspondante dans la trame est codée dans un « mode de codage basé champ », les informations de mouvement respectives concernant la paire de macroblocs sont converties par l'intermédiaire d'une trame de référence, puis sont copiées directement dans un champ correspondant respectivement.

7. Procédé selon la revendication 4 ou 5, **caractérisé en ce que** l'étape consistant à diviser les informations de mouvement concernant le champ à partir des informations de mouvement concernant la trame de la couche courante comprend :
si une paire de macroblocs correspondante dans la trame est codée dans un « mode de codage basé trame », les informations de mouvement concernant la paire de macroblocs sont combinées et copiées dans tous les champs divisés, et les informations de mouvement concernant la paire de macroblocs sont combinées selon les règles suivantes :
lorsqu'un macrobloc dans la paire de macroblocs est dans un mode de prédiction intra et que l'autre macrobloc n'est pas dans le mode de prédiction intra, les informations de mouvement obtenues par l'intermédiaire d'une combinaison sont invalides ; ou
lorsque deux macroblocs de la paire de macroblocs sont tous deux dans un mode de prédiction inter, les informations de mouvement concernant la paire de macroblocs sont combinées verticalement, et une longueur verticale d'un bloc d'informations de mouvement obtenu est au moins deux fois celle d'un bloc d'informations de mouvement minimum, lorsque la paire de macroblocs dans le mode de prédiction inter est combinée, si les deux macroblocs ont des trames de référence différentes, la trame de référence avec une valeur inférieure étant prise comme trame de référence après la combinaison, et une valeur moyenne de vecteurs de mouvement des deux macroblocs étant prise comme vecteur de mouvement après la combinaison.

8. Procédé selon l'une quelconque des revendications 1 à 5, **caractérisé en ce qu'**il comprend en outre : échantillonner et entrelacer deux trames successives de la couche courante pour obtenir une trame entrelacée de la couche courante, et utiliser la trame entrelacée pour exécuter le codage ou le décodage prédictif intercouche de la trame de la couche supérieure au point de temps correspondant, lorsque la couche courante n'est pas dans un mode entrelacé mais que la couche supérieure est dans le mode entrelacé.

9. Procédé selon l'une quelconque des revendications 1 à 5, **caractérisé en ce qu'**il comprend en outre : inclure des informations d'indication concernant un mode de codage prédictif intercouche dans un code de prédiction intercouche, lorsque le décodage prédictif intercouche est exécuté, un mode de décodage prédictif intercouche correspondant au mode de codage prédictif intercouche étant utilisé selon les informations d'indication.

10. Dispositif de codage et de décodage, **caractérisé en ce qu'**il comprend : un module de division et un module de codage et de décodage prédictifs intercouches,
le module de division étant conçu pour diviser une trame entrelacée d'une couche courante en champs ; et
le module de codage et de décodage prédictifs intercouches étant conçu pour déterminer un champ dans la couche courante au même point de temps qu'une trame d'une couche supérieure à partir des champs de la couche courante divisée par le module de division, prédire la trame de la couche supérieure en utilisant le champ correspondant au même point de temps pour exécuter le codage et le décodage prédictifs intercouches, et produire des résultats de codage et de décodage ;
le champ correspondant au même point de temps étant uniquement le champ dans la couche courante correspondant à la trame de la couche supérieure et la couche courante étant une couche de base, BL, et la couche supérieure étant une première couche améliorée, EL ou une autre EL située au-dessus de la première EL.

11. Dispositif selon la revendication 10, **caractérisé en ce qu'**il comprend en outre : un premier module de détermination, conçu pour déterminer que la trame entrelacée de la couche courante est utilisée pour exécuter le codage ou le décodage prédictif intercouche d'une trame correspondante de la couche supérieure dans le temps selon des caractéristiques des données de flux vidéo à coder ou à décoder, et notifier le module de codage et de décodage prédictifs intercouches ; après avoir reçu la notification à partir du premier module de détermination, le module de codage et de décodage prédictifs intercouches utilisant la trame entrelacée de la couche courante pour exécuter le codage ou le décodage prédictif intercouche de la trame correspondante de la couche supérieure dans le temps ;
où déterminer que la trame entrelacée de la couche courante est utilisée pour exécuter le codage ou le décodage prédictif intercouche d'une trame correspondante de la couche supérieure dans le temps selon des caractéristiques des données de flux vidéo à coder ou à décoder, comprend :
lorsque la couche courante et la couche supérieure ont le même taux de trame, chaque trame de la couche courante correspond à une seule trame de la couche supérieure, et est utilisée pour le codage ou le décodage prédictif intercouche ; ou
lorsqu'un taux de trame de la couche courante est la moitié de celui de la couche supérieure, chaque trame de la couche courante correspond à deux trames successives de la couche supérieure, et est utilisée dans le codage ou le décodage prédictif intercouche.

12. Dispositif selon la revendication 11, **caractérisé en ce qu'**il comprend en outre : un deuxième module de détermination, le module de codage et de décodage prédictifs intercouches utilisant un champ divisé pour exécuter le codage prédictif intercouche d'une trame correspondante de la couche supérieure, et utilisant une trame entrelacée de la couche courante pour exécuter le codage prédictif intercouche d'une trame correspondante de la couche supérieure dans le temps ; et le deuxième module de détermination étant conçu pour déterminer l'efficacité des deux modes de codage prédictif intercouche adoptés par le module de codage et de décodage prédictifs intercouches, et commander de manière adaptative le module de codage et de décodage prédictifs intercouches pour délivrer un code de prédiction intercouche présentant une efficacité maximale.

13. Dispositif selon la revendication 10, **caractérisé en ce qu'**il comprend en outre : un module de combinaison, lorsque la couche courante n'est pas dans un mode entrelacé mais que la couche supérieure est dans le mode entrelacé, le module de combinaison échantillonnant et entrelaçant deux trames successives de la couche courante pour obtenir une trame entrelacée de la couche courante ; et le module de codage et de décodage prédictifs intercouches utilisant la trame entrelacée générée par le module de combinaison pour exécuter le codage ou le décodage prédictif intercouche d'une trame de la couche supérieure à un point de temps correspondant.
